# FASCICULE DE BREVET EUROPEEN

(11) **EP 0 676 281 B1**
(45) Date de publication et mention de la délivrance du brevet: **07.06.2000**
(21) Numéro de dépôt: 94400759.0
(22) Date de dépôt: 06.04.1994
(51) Int. Cl.: B32B 7/10, B32B 25/08, F16G 5/06, F16G 1/08, F16L 11/08

(54) **Procédé de réalisation d'un matériau composite et ses applications**
Verfahren zur Herstellung eines Verbundstoffes, und dessen Anwendungen
Method of making a composite material, and its applications

(43) Date de publication de la demande: 11.10.1995
(73) Titulaire: CAOUTCHOUC MANUFACTURE ET PLASTIQUES, F-78000 Versailles (FR)
(72) Inventeur: Derroire, Georges, F-63200 Riom (FR); Marchand, Jacques, F-58000 Nevers (FR); Colley, Robert, F-63670 Le Cendre (FR)
(74) Mandataire: Rinuy, Santarelli

(56) Documents cités:
- EP-A- 0 149 356
- EP-A- 0 451 983
- DE-A- 2 111 117
- DE-A- 3 822 471
- FR-A- 2 488 674
- FR-A- 2 702 994
- US-A- 4 603 712

## Description

La présente invention est relative au domaine de la réalisation de matériaux composites constitués par l'association d'au moins deux couches de polymères ne présentant pas d'affinité mutuelle.

Dans l'industrie de transformation des polymères, de nombreux articles sont constitués de matériaux élastomères ou plastiques, de natures différentes, choisis pour leurs caractéristiques physiques ou chimiques, et éventuellement associés à des renforts textiles. Dans la grande majorité des applications, particulièrement celles où les articles sont soumis à des sollicitations mécaniques, les divers éléments constituants doivent, pour satisfaire aux exigences du cahier des charges de l'utilisateur, présenter une forte adhérence, le plus souvent obtenue par liaison physico-chimique résultant de la mise en oeuvre.

L'association de certains composants tels les polybutadiènes, les homopolymères, copolymères ou terpolymères d'éthylène propylène, les polymères halogénés, tels les polyéthylènes chlorés, ou chlorosulfonés, les épichlorhydrines, les copolymères d'isoprène et d'isobutylène chlorés ou bromés ou les polychloroprènes, certains composés acryliques tels les polyacrylates, les copolymères d'éthylène-acrylate ou les copolymères de butadiène-acrylonitrile, ainsi que d'autres polymères tels les polyesters, les polyuréthanes et les silicones, pose de nombreuses difficultés, pour obtenir une adhérence correcte, en raison de l'absence d'affinité mutuelle des polymères de deux familles chimiques différentes.

De nombreuses techniques ont été développées pour résoudre le problème de l'affinité chimique des polymères. Certaines, comme celle décrite dans le document FR-A-2 090 573 d'UNIROYAL consiste simplement à interposer une couche de cément adhésif entre les composés à associer. Cette solution conduit à un niveau d'adhérence généralement acceptable si les conditions d'utilisation ne sont pas trop sévères mais présente de nombreux inconvénients liés à la nature même de la colle de liaison, souvent coûteuse et de durée d'utilisation limitée, à sa mise en oeuvre, nécessitant l'évaporation contrôlée de solvants dangereux et polluants, et aux risques de défectuosité des articles ainsi fabriqués. La fiabilité d'une telle liaison, dans le temps et sous l'effet des conditions de température ou d'agressivité du milieu ambiant, diminue au cours de l'utilisation.

Une autre technique consiste en un traitement de surface de l'un au moins des composants, en phase liquide ou par vaporisation comme décrit dans les documents FR-A-2 321 953 de HULS et FR-A-2 235 155 de STAMICARBON, ou par dépôt de poudre comme décrit dans le document FR-A-2 632 654 d'ATOCHEM. Cette technique présente l'inconvénient de nécessiter plusieurs manipulations et, de ce fait, d'augmenter les coûts de mise en oeuvre.

D'autres techniques, encore plus évoluées, consistent à obtenir, par copolymérisation ou par greffage, des compositions susceptibles de présenter - dans des conditions de mise en oeuvre parfois très délicates - une affinité chimique avec chacun des composants à assembler.

Le procédé de la présente invention est défini à la revendication 1. L'invention a également pour objet la mise à disposition d'un matériau composite défini à la revendication 2 et de formes particulières de ce matériau, définies aux revendications 3 à 6.

L'invention concerne également les articles réalisables selon ce procédé, à savoir des tuyaux, des compensateurs de dilatation et des courroies.

L'invention sera mieux comprise à la lecture des dessins accompagnant la description, dans lesquels :
- la figure 1 illustre la constitution d'un matériau composite selon l'invention ;
- la figure 2 décrit l'application du matériau composite selon l'invention à la réalisation de tuyaux droits ou coudés ;
- la figure 3 illustre, sur une demi-coupe, un manchon compensateur de dilatation comportant une paroi en matériau composite conforme à l'invention ;
- la figure 4 est un exemple d'utilisation du matériau composite selon l'invention à la réalisation d'une courroie transporteuse ou de transmission.

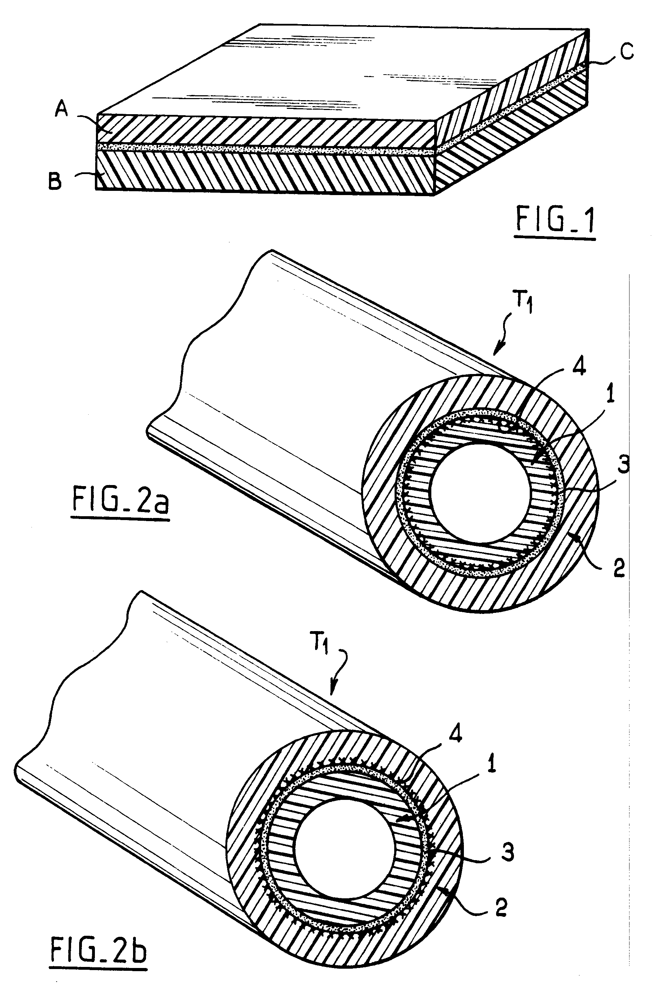

La figure 1 illustre, en perspective, la constitution d'un matériau composite, conforme à l'invention.

Une première composition polymérique (A) ne présentant pas d'affinité chimique pour une deuxième composition polymérique (B) lui est assemblée, grâce à une liaison intime physico-chimique, sous l'effet d'un traitement thermique sous pression, par interposition d'une couche intercalaire d'une composition polymérique (C). La caractéristique principale de la couche intercalaire en composition polymérique (C) est de présenter, naturellement, sans traitement physique ou chimique, une affinité chimique vis à vis des compositions polymériques (A) et (B).

La couche intercalaire (C) de polyéthylène chloré, grâce à l'affinité chimique qu'elle présente vis à vis des compositions (A) de terpolymère éthylène-propylène-diène et (B) de copolymère d'éthylène-acrylate assure la liaison physico-chimique intime entre elles.

La figure 1 montre le matériau composite le plus simple, selon l'invention, constitué des trois couches en composition polymérique (A), (B) et (C). Préférentiellement, la couche intercalaire (C) présente une épaisseur de l'ordre de 0,05 à 2 fois celle de la couche en composition polymérique (A, B) la plus épaisse.

Il est bien évident, pour l'homme de l'art, que plusieurs couches de composition polymérique (A) peuvent être associées, selon les besoins de l'application, à plusieurs couches en composition polymérique (B), par l'intermédiaire de plusieurs couches intercalaires en composition polymérique (C).

D'une manière similaire, au matériau composite ci-dessus défini, pourraient être ajoutées des couches en composition polymérique (D), de nature chimique différente des compositions polymériques (A) et (B) et dépourvues d'affinité avec au moins l'une d'elles, soit par interposition de couches en composition polymérique (C), si elle présente une affinité chimique avec la composition polymérique (D), soit d'une autre composition polymérique (C') devant présenter une affinité chimique avec les compositions polymériques (A) ou (B) et (D).

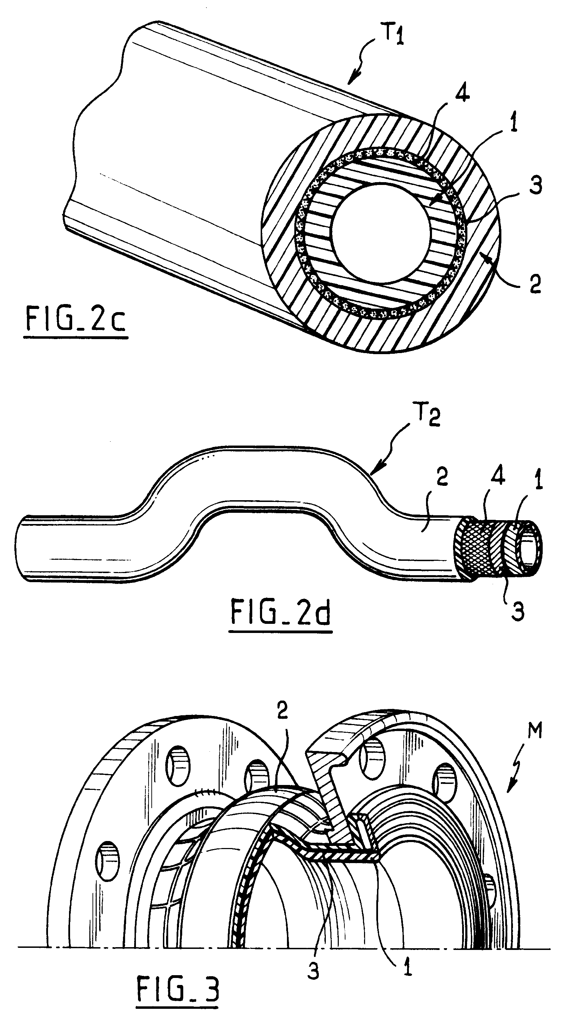

La figure 2 décrit l'application du matériau composite à trois couches à la réalisation de tuyaux droits ou coudés.

Lesdits tuyaux sont constitués, comme illustré sur la vue 2a, d'au moins un tube interne (1), d'un revêtement extérieur (2) et d'une couche intercalaire (3).

Ils peuvent, en outre, comporter un renforcement (4), généralement textile, selon les conditions d'utilisation et, en particulier, la pression de service.

De tels tuyaux (T1, T2), flexibles, trouvent leur application dans l'industrie automobile, particulièrement les circuits d'alimentation ou de refroidissement du moteur, ainsi que dans certaines industries chimiques.

La composition de terpolymère éthylène-propylène-diène (A), constituant du tube interne (1), est choisie pour son inertie chimique vis à vis du fluide véhiculé, par exemple le liquide antigel dans les circuits de refroidissement ou le carburant dans les circuits d'alimentation automobile, ou les solvants dans les applications chimiques. A la composition polymérique (A) peuvent être ajoutés les adjuvants classiques tels que charges renforçantes noires ou claires, plastifiants, agents anti-dégradants (anti-oxygène et anti-ozone), agents de vulcanisation permettant la réticulation du polymère et agents facilitant la mise en oeuvre.

La composition de copolymère d'éthylène-acrylate (B), constituant du revêtement extérieur (2), est choisie, pour sa résistance thermique et pour sa résistance aux projections de fluides agressifs, tels que les hydrocarbures, dans les applications pour l'automobile où la température sous le capot du moteur peut atteindre 175°C.

La liaison entre les compositions polymériques (A) et (B) est assurée par la couche intercalaire (3) en composition de polyéthylène chloré (C) qui, préservée du contact avec le fluide par le tube interne (1) et du contact avec le milieu ambiant par le revêtement extérieur (2), possède, comme caractéristique essentielle, une affinité chimique vis à vis des composants de ces deux couches au contact.

Le renforcement facultatif (4) est, le plus généralement, placé au contact de la couche intercalaire (3) en composition polymérique (C) ; il peut être disposé entre le tube interne (1) ou le revêtement extérieur (2) et la couche intercalaire (3) et présente donc un contact partiel avec cette dernière, ou encore être noyé dans cette dernière, comme illustré sur les vues 2a, 2b et 2c, respectivement.

Le tube interne (1) est constitué d'une composition élastomérique (A) de terpolymère éthylène-propylène-diène, le revêtement extérieur (2) est constitué d'une composition polymérique (B) de copolymère éthylène-acrylate et la couche intercalaire (3) est constituée d'une couche en composition de polyéthylène chloré.

D'une manière similaire, comme illustré sur l'écorché de la vue 2d, peuvent être réalisés des tuyaux coudés (T2), c'est à dire de forme pré-déterminée, généralement utilisés dans le domaine automobile. Leur constitution est semblable à celle des tuyaux illustrés sur'l'une des vues 2a à 2c.

La figure 3 illustre, sur une vue en demi-coupe, dans la région du talon, un manchon compensateur de dilatation, destiné à être monté entre deux tubulures rigides pour absorber leurs dilatations ou contractions dues aux changements de température.

La paroi dudit manchon compensateur de dilatation (M) comporte, de l'intérieur vers l'extérieur, un tube interne (1) en composition polymérique (A), dont la matrice et les adjuvants sont choisis pour résister à l'action du fluide véhiculé et un revêtement extérieur (2), constitué d'une autre composition polymérique (B), et destiné à protéger ses composants de l'environnement, les compositions polymériques (A) et (B) étant dépourvues d'affinité chimique entre elles.

La liaison adhésive entre le tube interne (1) et le revêtement extérieur (2) est assurée par la couche intercalaire (3) présentant une affinité chimique avec les compositions polymériques (A) et (B) et constituée d'une composition de polyéthylène chloré.

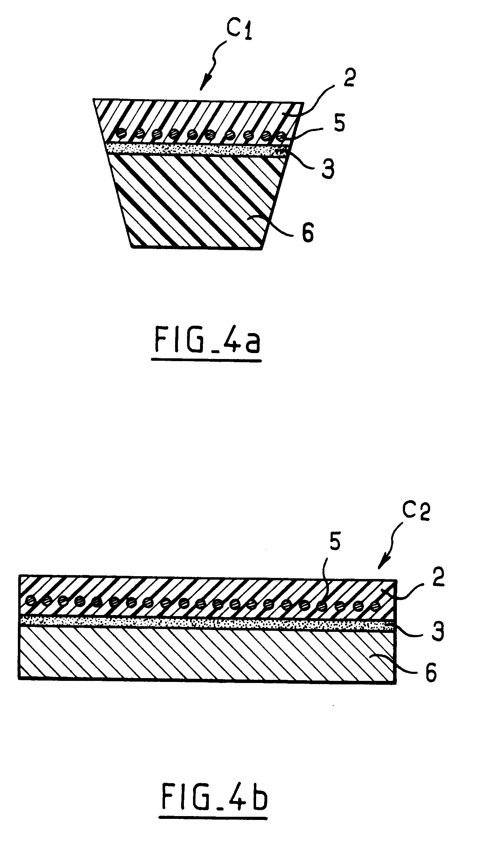

La figure 4 est un exemple d'application du procédé selon l'invention à la réalisation de courroies.

La vue 4a illustre, en coupe, une courroie de transmission (C1), de section trapézoïdale à titre d'exemple non limitatif, comportant un élément de traction (5) et dont les composants sont protégés des agressions du milieu extérieur telles que projections d'huile par un revêtement extérieur (2) en composition de copolymère d'éthylène-acrylate (B), résistant aux huiles et à la chaleur ; la base (6) est faite d'une composition de terpolymère éthylène-propylène-diène (B), la liaison intime entre la base (6) et le revêtement extérieur (2) étant assurée par la couche intercalaire de polyéthylène chloré (3) qui peut être placée au dessus ou au dessous (comme illustré) de l'élément de traction (5). Cette constitution serait également applicable à la réalisation de courroies synchrones ou striées.

La vue 4b illustre, en coupe, la construction d'une courroie plate (C2), de transmission ou transporteuse, dans laquelle le revêtement extérieur (2) constitué de la composition polymérique (B) est lié à la base (6) comportant un renforcement textile (4) par l'intermédiaire de la couche intercalaire (3).

Dans toutes les applications illustrées, la composition polymérique (A), qui constitue le tube interne des tuyaux (T1, T2) ou des manchons compensateurs (M) ou la base des courroies (C1, C2) est constituée d'une composition de terpolymère éthylène-propylène-diène ; la composition polymérique (B) qui constitue leur revêtement extérieur (2) est constituée d'une composition de copolymère d'éthylène-acrylate.

La couche intercalaire (3) est une composition de polyéthylène chloré.

Par rapport aux procédés d'assemblage de deux composants dépourvus d'affinité chimique connus de l'art antérieur, le procédé objet de l'invention présente les avantages :
- de ne pas nécessiter de traitement physique et/ou chimique de la surface ou de la structure des composants qui en modifie les caractéristiques,
- d'être peu onéreux et non polluant,
- d'assurer une liaison physico-chimique intime entre les composants sans favoriser les localisations de contraintes en régime dynamique, grâce à la création d'un composite présentant une assez grande homogénéité des modules.

## Revendications

1. Procédé de réalisation d'un matériau composite par assemblage d'au moins deux couches de compositions polymériques (A, B) dépourvues d'affinité chimique entre elles, par interposition d'une couche intercalaire (3), constituée d'une composition polymérique (C) de nature différente et présentant une affinité chimique avec chacune des compositions chimiques à assembler (A, B), caractérisé en ce que la matrice de la composition polymérique (A) est un terpolymère éthylène-propylène-diène, en ce que la matrice de la composition polymérique (B) est un copolymère d'éthylène-acrylate et en ce que la matrice de la composition polymérique (C) est du polyéthylène chloré.

2. Un matériau composite comprenant deux couches de compositions polymériques (A, B) dépourvues d'affinité chimique, l'une pour l'autre, entre lesquelles est interposée une couche intercalaire constituée d'une composition polymérique (C) de nature différente et présentant une affinité chimique avec chacune des compositions chimiques (A, B), caractérisé en ce que la matrice de la composition polymérique (A) est un terpolymère éthylène-propylène-diène, en ce que la matrice de la composition polymérique (B) est un copolymère d'éthylène-acrylate et en ce que la matrice de la composition polymérique (C) et du polyéthylène chloré.

3. Tuyau droit (T1) ou coudé (T2) comportant au moins un tube interne (1), constitué d'une composition polymérique (A) et un revêtement extérieur (2), constitué d'une composition polymérique (B) dépourvue d'affinité chimique avec la précédente, caractérisé en ce qu'il est réalisable par un procédé conforme à la revendication 1.

4. Tuyau droit (T1 ou coudé (T2), selon la revendication 3, comportant, en outre, un renforcement textile (4), caractérisé, en ce que la couche intercalaire (3), en composition polymérique (C), est placée au contact, au moins partiel, dudit renforcement textile.

5. Manchon compensateur (M) comportant au moins un tube interne (1), constitué d'une composition polymérique (A) et un revêtement extérieur (2), constitué d'une composition polymérique (B) dépourvue d'affinité chimique avec la précédente, caractérisé en ce qu'il est réalisable par un procédé conforme à la revendication 1.

6. Courroie (C1, C2) comportant, outre un élément textile (5) de renforcement ou de traction, au moins une base (6), en composition polymérique (A) et un revêtement extérieur (2), en composition polymérique (B) dépourvue d'affinité chimique pour la précédente, caractérisée en ce qu'elle est réalisable par un procédé conforme à la revendication 1.

## Claims

1. Process for producing a composite by joining together at least two layers of polymeric compositions (A, B) which have no chemical affinity for each other, by interposing an interlayer (3) consisting of a polymeric composition (C) of different nature and having a chemical affinity with each of the chemical compositions (A, B) to be joined together, characterized in that the matrix of the polymeric composition (A) is an ethylene-propylene-diene terpolymer, in that the matrix of the polymeric composition (B) is an ethylene-acrylate copolymer and in that the matrix of the polymeric composition (C) is chlorinated polyethylene.

2. Composite comprising two layers of polymeric compositions (A, B) which have no chemical affinity for each other, between which an interlayer, consisting of a polymeric composition (C) of different nature and having a chemical affinity with each of the chemical compositions (A, B), is interposed, characterized in that the matrix of the polymeric composition (A) is an ethylene-propylene-diene terpolymer, in that the matrix of the polymeric composition (B) is an ethylene-acrylate copolymer and in that the matrix of the polymeric composition (C) is chlorinated polyethylene.

3. Straight hose (T1) or bent hose (T2) comprising at least one internal tube (1), consisting of a polymeric composition (A), and an outer covering (2), consisting of a polymeric composition (B) which has no chemical affinity with the previous composition, characterized in that it can be produced by a process according to Claim 1.

4. Straight hose (T1) or bent hose (T2), according to Claim 3, which furthermore includes a textile reinforcement (4), characterized in that the interlayer (3), made of polymeric composition (C), is placed at least partially in contact with the said textile reinforcement.

5. Compensating sleeve (M) comprising at least one internal tube (1), consisting of a polymeric composition (A) and an outer covering (2), consisting of a polymeric composition (B) which has no chemical affinity with the previous composition, characterized in that it can be produced by a process according to Claim 1.

6. Belt (C1, C2) comprising, in addition to a textile reinforcing or tensioning element (5), at least one base (6), made of polymeric composition (A), and an outer covering (2), made of polymeric composition (B) which has no chemical affinity for the previous composition, characterized in that it can be produced by a process according to Claim 1.

## Patentansprüche

1. Verfahren zur Herstellung eines Verbundstoffes durch Verbindung von mindestens zwei Schichten von Polymerverbindungen (A, B), die keine chemische Affinität zueinander aufweisen, durch Einlegen einer Zwischenschicht (3), die von einer Polymerverbindung (C) von unterschiedlicher Natur gebildet wird, welche eine chemische Affinität mit jeder der zu verbindenden chemischen Verbindungen (A, B) aufweist, dadurch gekennzeichnet, daß die Masse der Polymerverbindung (A) ein Ethylen-Propylen-Dien-Terpolymer ist, daß die Masse der Polymerverbindung (B) ein Ethylenakrylat-Copolymer ist und daß die Masse der Polymerverbindung (C) ein chloriertes Polyethylen ist.

2. Verbundstoff, bestehend aus zwei Schichten von Polymerverbindungen (A, B), die keine chemische Affinität zueinander aufweisen, zwischen denen eine Zwischenschicht angeordnet ist, die von einer Polymerverbindung (C) von unterschiedlicher Natur gebildet wird, welche eine chemische Affinität mit jeder der zu verbindenden chemischen Verbindungen (A, B) aufweist, dadurch gekennzeichnet, daß die Masse der Polymerverbindung (A) ein Ethylen-Propylen-Dien-Terpolymer ist, daß die Masse der Polymerverbindung (B) ein Ethylenakrylat-Copolymer ist und daß die Masse der Polymerverbindung (C) ein chloriertes Polyethylen ist.

3. Gerades (T1) oder gekrümmtes Rohr (T2), bestehend aus mindestens einem Innenrohr (1), das von einer Polymerverbindung (A) und einer Außenverkleidung (2), die aus einer Polymerverbindung (B) ohne chemische Affinität zu der vorhergehenden besteht, gebildet wird, dadurch gekennzeichnet, daß es durch ein Verfahren nach Anspruch 1 herstellbar ist.

4. Gerades (T1) oder gekrümmtes Rohr (T2) nach Anspruch 3, ferner bestehend aus einer textilen Verstärkung (4), dadurch gekennzeichnet, daß die Zwischenschicht (3) aus Polymerverbindung (C) zumindest teilweise in Kontakt mit der textilen Verstärkung angeordnet ist.

5. Ausdehnungsmuffe (M), bestehend aus mindestens einem Innenrohr (1), das von einer Polymerverbindung (A) und einer Außenverkleidung (2) gebildet wird, die aus einer Polymerverbindung (B) ohne chemische Affinität mit der vorhergehenden besteht, dadurch gekennzeichnet, daß sie durch ein Verfahren nach Anspruch 1 herstellbar ist.

6. Riemen (C1, C2), ferner umfassend ein textiles Verstärkungs- oder Zugelement (5), mindestens eine Basis (6) aus Polymerverbindung (A) und eine Außenverkleidung (2) aus einer Polymerverbindung (B) ohne chemische Affinität zu der vorhergehenden, dadurch gekennzeichnet, daß er durch ein Verfahren nach Anspruch 1 herstellbar ist.
